# EUROPÄISCHE PATENTANMELDUNG

(11) **EP 0 522 270 A1**
(43) Veröffentlichungstag der Anmeldung: **13.01.1993**
(21) Anmeldenummer: 92108603.9
(22) Anmeldetag: 21.05.1992
(51) Int. Cl.: F03H 1/00, H05H 1/34

(54) **Triebwerk für Raumflugkörper**

(30) Priorität: 10.07.1991 DE 4122756
(71) Anmelder: ERNO Raumfahrttechnik Gesellschaft mit beschränkter Haftung, D-28199 Bremen (DE)
(72) Erfinder: Steenborg, Manfred, W-2863 Ritterhude (DE)
(74) Vertreter: Schramm, Ewald Werner Josef

(57) **Zusammenfassung**

Ein Triebwerk, das insbesondere für die Bahnkorrektur von Raumflugkörpern dient, besteht aus einem als Anode ausgebildeten Gehäuse (5), gleichzeitig Expansionsdüse, und einer darin zentrisch gehalterten stabförmigen elektrisch isolierten Kathode (11). Die Kathode (11) ist in einer Brennkammer (7) angeordnet, in die Treibgase eingespritzt werden. Die Spitze der Kathode (11) ist vom verengten Querschnitt des Düsenhalses (9) mit kleinem Luftspalt beabstandet. Zwischen der Anode und Kathode ist bei Gasströmung ein Lichtbogen gezündet, aus dem die Treibgase zusätzliche thermische Energie aufnehmen. Ein Teil dieser Treibgase wird über eine in der Kathode (11) angeordnete zentrische Bohrung in die Brennkammer eingespritzt. Die dem Düsenhals (9) gegenüberliegende Kathodenspritze wird von einem Einsatzkörper (63,73,83) aus Wolfram geformt.

## Beschreibung

Die Erfindung betrifft ein Triebwerk, insbesondere für Raumflugkörper, bei dem zwischen einem als Anode und Expansionsdüse ausbildeten Gehäuse sowie der Spitze einer in diesem angeordneten Kathode bei Gasströmung ein Lichtbogen gezündet wird, wobei die Kathode elektrisch isoliert in einer ersten, als Brennkammer ausgebildeten Ausnehmung des Gehäuses untergebracht ist und diese mit der Spitze mit kleinem Luftspalt beabstandet vor dem verengten Querschnitt der Expansionsdüse positioniert ist und wobei in die Brennkammer Treibgase eingespritzt werden.

Ein derartiges Triebwerk, das in der Fachwelt als Arcjet bezeichnet wird, ist unter anderem durch die Veröffentlichung "Cathode Erosion Tests for 30 kW Arcjets" vom W.D. Deininger, A. Chopra und K.D. Goodfellow, A/AA 89-2264, bekannt geworden, die aus Anlaß der Tagung A/AA/ASME/SAE/ASEE 25th Joint Propulsion Conference, Monterey, CA, July 10-12, 1989, erschienen ist. Das Treibgas, in der Regel Ammoniak (NH₃) oder ein durch thermische und/oder katalytische Zersetzung von Hydrazin (N₂H₄) erzeugtes Gemisch aus Ammoniak, Stickstoff- (N₂) und Wasserstoffgas (H₂) wird bei diesem bekannten Triebwerk durch eine in der Seitenwand der Brennkammer angebrachte Bohrung in die Brennkammer geleitet. Das Gas, das bei seinem Eintritt in die Brennkammer zunächst eine Temperatur der der Größenordnung von 500 - 600^{o} C aufweist, erwärmt sich im Lichtbogen, der sich zwischen der Anode + Anschluß und Kathode - Anschluß bildet, auf Temperaturen von 10 - 15.000^{o}C, bevor es die Expansionsdüse verläßt und dort den gewünschten Vortrieb erzeugt.

Der nach der Zündung bei Gasströmung des Triebwerks sich aufbauende Lichtbogen erstreckt sich von der Anode + Anschluß bis zu der im allgemeinen konisch ausgebildeten Spitze der Kathode - Anschluß durch den Düsenhals, wobei der Lichtbogen, der sich zwischen Anode (Düse) und Kathode befindet, dem Treibgas den größten Teil seiner kinetischen Energie an das rotierende Gas im Düsenhals (Constrictor) überträgt. Dabei bildet sich der Lichtbogen genau auf der Mittelachse des Constrictors aus.

Der Bereich, in dem der Lichtbogen aus der Innenwand der Expansionsdüse austritt, ist mit Wandtemperaturen von über 2.000^{o}C thermisch besonders hoch beansprucht. Um einen möglichst stabilen Lichtbogen zu erzielen, wird eine rotierende Strömung der Treibgase im Düsenhals angestrebt. Eine hohe Rotationsgeschwindigkeit der Treibgase ist dabei zugleich eine wichtige Voraussetzung dafür, daß sich im Bereich des Düsenhalses (Constrictor) eine möglichst eng anliegende Gasströmung ergibt und gleichzeitig aufgrund der hohen Geschwindigkeit bei der Rotation möglichst viel Wärme von Lichtbogen auf das Gas übertragen wird.

Zur Erzielung eines rotierenden Gasstrahles wird bei derartigen Triebwerken das Treibgas in der Regel durch in der Seitenwand der Brennkammer oder in einem zwischen der Kathode und der diese umgebenden Anode vorgesehenen ringförmigen Isolator angeordnete Bohrungen mit einer tangentialen Strömungskomponente in die Brennkammer eingeleitet.

Ein weiteres thermisch außerordentlich stark beanspruchtes Bauteil ist die Kathode, wobei diese Beanspruchung aus der Konzentration des Lichtbogenstromes auf den vergleichsweise engen Bereich der Kathodenspitze verursacht ist und lokal zu Temperaturen > 3.000^{o}C führen kann. Wenn diese Belastung über eine Brenndauer von 1.000 Stunden oder mehr ansteht, kann dies zu Erosionserscheinungen an der Kathodenspitze führen. Die sich dabei bildende Mulde verursacht Asymmetrien des Lichtbogens und damit eine Fehlfunktion, durch die die Standzeit eines derartigen Triebwerks erheblich beeinträchtigt werden kann.

Aufgabe der Erfindung ist es, ein Triebwerk der eingangs genannten Art so auszubilden, daß der Verschleiß der einzelnen Komponenten, insbesondere der Kathode aufgrund thermischer Beanspruchungen weitgehend verringert und dadurch die Standzeit eines solchen Triebwerkes wesentlich verbessert wird.

Die Erfindung löst diese Aufgabe durch ein Triebwerk mit den kennzeichnenden Merkmalen des Patentanspruchs 1. Vorteilhafte Weiterbildungen des erfindungsgemäßen Triebwerkes, die geeignet sind, die Beanspruchungen darüber hinaus noch weiter zu verringern, sind in den Unteransprüchen angegeben.

Dadurch, daß bei dem erfindungsgemäßen Triebwerk vorgesehen ist, daß ein Teil der in die Brennkammer eingespritzten Treibgase durch die Kathode strömt, wird die Temperatur der Kathode, insbesondere der thermisch besonders beanspruchten Spitze, deutlich abgesenkt. Geht man davon aus, daß beispielsweise die durch Zersetzung von Hydrazin erzeugten Treibgase die Zersetzungskammer mit einer Temperatur zwischen 500 und 600^{o}C verlassen, so läßt sich durch die erfindungsgemäß vorgesehene Maßnahme der Gaszuführung durch die Kathodenspitze in diesem Bereich eine Temperaturabsenkung um etwa 500 bis 1.000^{o}C erzielen. Diese Kühlung der Kathodenspitze verhindert weitgehend jede Erosionserscheinung und bewirkt, daß die Spitze ihre ursprüngliche Form beibehält, da die Temperatur an der Spitze dann bei ∼ 2.200 bis 2.800^{o}C liegt.

Da über die Wahl des Durchmessers des Bohrungskanals die über die Kathode zugeführte Gasmenge beeinflußt werden kann, ist in Abhängigkeit von der durch die Stärke des Lichtbogens hervorgerufenen Strombelastung an der Kathodenspitze die Temperatur einstell- und optimierbar.

Ein weiterer Vorteil der Erfindung ist darin zu sehen, daß aufgrund der bereits vorhandenen erhöhten Temperatur der durch die Kathode strömenden Treibgase beim Start des erfindungsgemäßen Triebwerkes gleichsam eine Vorwärmung der Kathode erfolgt. Dies führt zu einer zusätzlichen Verminderung der Erosionserscheinungen, da insbesondere ein Kaltstart derartiger Triebwerke ansonsten zu starker Erosion an der Kathodenspitze führen kann.

Von Vorteil ist ferner auch, daß über die in der Kathodenspitze vorhandene Bohrung bei der Montage des erfindungsgemäßen Triebwerkes der exakt mittige Sitz der Kathode überprüft und gegebenenfalls justiert werden kann. In der Entwicklungsphase eines derartigen Triebwerkes kann auf diese Weise zugleich durch optische Inspektion von außen, ohne die Kathode aus dem Triebwerk auszubauen, festgestellt werden, ob Abbrand bzw. außermittige Erosionserscheinungen aufgetreten sind.

Als vorteilhaft hat es sich im Zusammenhang mit dem erfindungsgemäßen Triebwerk weiterhin erwiesen, wenn die Spitze der Kathode von einem speziellen Einsatzkörper gebildet wird, der in eine entsprechende Ausnehmung an der Stirnseite der stabförmigen Kathode eingeschweißt oder eingelötet wird. Auf diese Weise ist es möglich, die Kathode selbst aus Werkstoffen wie Rhenium oder Molybdän bzw. dessen Legierungen zu fertigen und einen Einsatzkörper aus thoriertem Wolfram oder CVD Wolfram vorzusehen. Dies hat den Vorteil, daß das schwierig zu bearbeitende thorierte Wolfram aus einem nur sehr kleinem Einsatz besteht und damit einfacher zu fertigen ist.

Weiterhin ist es möglich, Teile der Kathode aus Chemical vapor deposited Tungsten (Wolfram) CVD tungsten herzustellen. Dieses Material besitzt geringeres Kornwachstum bei hohen Temperaturen und einen fast gleichbleibenden elektrischen Widerstand.

Über den chemischen Aufdampfprozeß sind komplette Kathoden (aus einem Stück hergestellt) fertigbar. Der Wolframwerkstoff wird dabei auf einem Kern, der später aus der Kathode ausgeätzt wird, als Hohlkörper hergestellt mit den gemäß Zeichnung definierten Dimensionen.

Nachfolgend soll die Erfindung anhand von in der Zeichnung dargestellten Ausführungsbeispielen näher erläutert werden. Es zeigen:
- Fig. 1: einen Schnitt durch ein erfindungsgemäßes Triebwerk,
- Fig. 2 und 3: zwei zueinander senkrechte Schnitte durch den Bereich der Brennkammer eines Triebwerkes gemäß Fig. 1,
- Fig. 4 bis 9: Schnittdarstellungen des Bereiches der Brennkammer bzw. des Düsenhalses in voneinander abweichenden Ausführungsformen,
- Fig. 10 bis 12: Detailschnitte unterschiedlicher Kathodenspitzen,
- Fig. 13: Kathode aus CVD tungsten komplett hergestellt und
- Fig. 14: Kathode aus einer Kontor mit CVD tungsten.

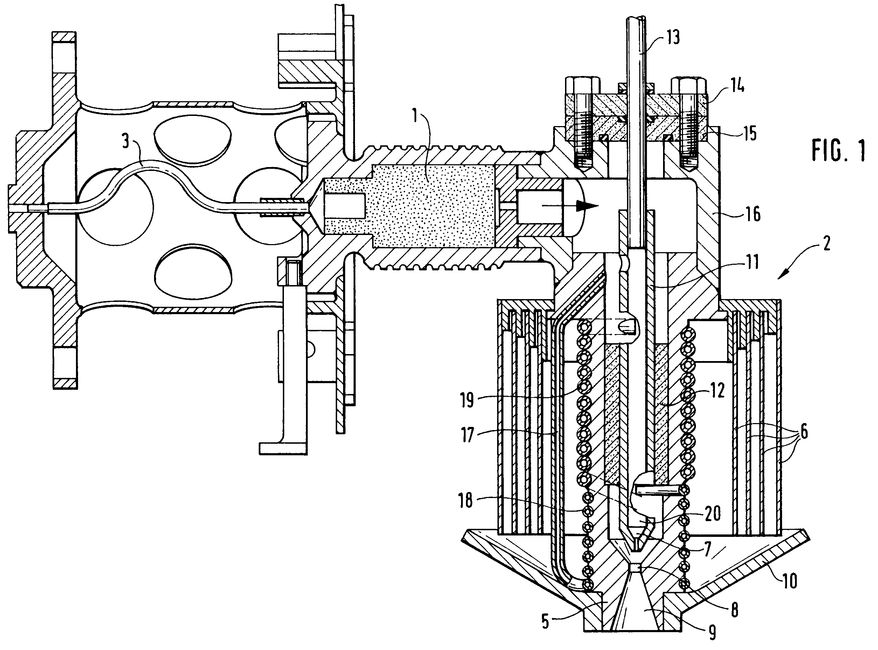

Bei der in Fig. 1 dargestellten Anordnung handelt es sich um ein Hochleistungstriebwerk, wie es unter anderem für die Bahn- und Lageregelung von Raumflugkörpern eingesetzt wird. Das Triebwerk umfaßt eine Zersetzungskammer 1, in der ein flüssiger Energieträger durch thermische und/oder katalytische Zersetzung in gasförmige Komponenten umgewandelt wird, die als Treibgase einem Lichtbogentriebwerk 2, einem sogenannten Arc-jet, zugeführt werden. Der flüssige Energieträger, im vorliegenden Fall Hydrazin (N₂H₄), befindet sich in einem hier nicht dargestellten Vorratsbehälter, von wo aus er über ein Einspritzrohr 3, das von einem Hitzeschild 4 umgeben ist, in die Zersetzungskammer 1 gelangt. Letztere enthält eine poröse Füllung, die im Fall des hier dargestellten Ausführungsbeispiels aus einem Katalysator besteht. Andere Zersetzungsformen sind möglich durch vorgeheizte Platin/Rhodiumkugeln oder Siebe (thermische Zersetzung). Das Lichtbogentriebwerk 2 besteht aus einem im wesentlichen rotationssymmetrischen Gehäuse 5, das von einer mehrlagigen Außenisolation 6 umgeben ist und in dem in zentrischer Anordnung eine Brennkammer 7, ein sich daran anschließender Düsenhals oder Constrictor 8 sowie eine Expansionsdüse 9 vorgesehen sind, Die Austrittsöffnung der Expansionsdüse 9 ist von einer Abstrahlfläche 10 umgeben. Im Zentrum der Brennkammer 7 ist eine stabförmige, konisch zugespitzte Elektrode 11 angeordnet, die über einen zylindrischen Isolationseinsatz 12 gehaltert ist und die über einen Anschluß 13 mit dem Minuspol einer hier nicht dargestellten elektrischen Energieversorgungseinheit verbunden ist. Der Anschluß 13 ist über zwei Keramikplatten 14 und 15 an einem Adapter 16 gehaltert, der die Zersetzungskammer 1 mit dem Gehäuse 5 verbindet.

Der aus der Zersetzungskammer 1 austretende, durch einen Pfeil angedeutete Gasstrahl gelangt über den Adapter 16 in das Gehäuse 5, wo er auf drei Wegen in die Brennkammer 7 gelangt: Ein erster Teilstrahl strömt über einen Kanal 17 in ein erstes spiralförmiges Rohrsystem 18, das das Gehäuse 5 im Bereich der Expansionsdüse 9, des Düsenhalses 8 und der Spitze der als Kathode dienenden Elektrode 11 umgibt. Ein zweiter Teil strömt durch eine weitere spiralförmige Rohranordnung 19, während ein dritter Teilstrahl durch eine zentrische Bohrung 20 in der Kathode 11 in die Brennkammer 7 gelangt.

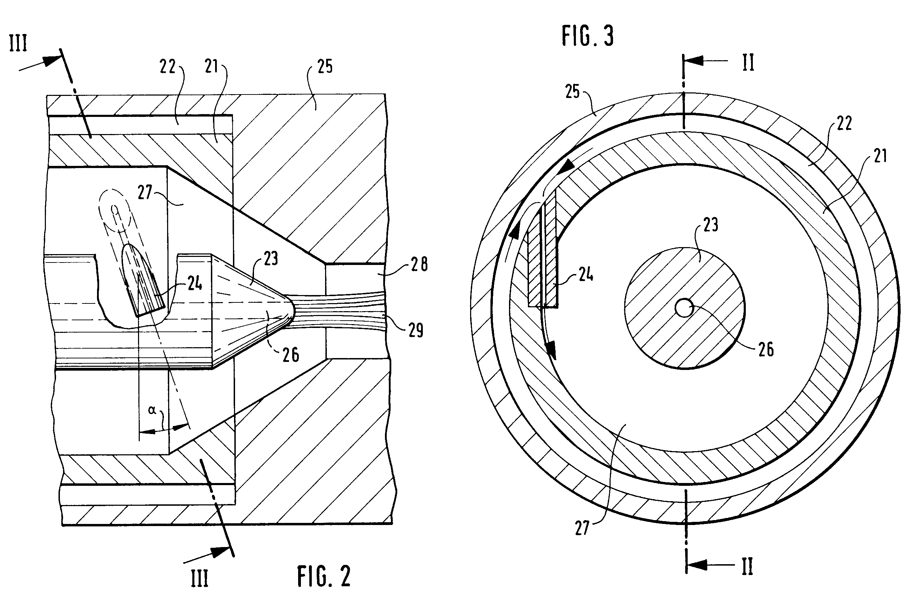

Detaillierte Darstellungen dieses Bereiches des Triebwerkes 2 sind für verschiedene Ausführungsformen in den Figuren 2 bis 9 enthalten, wobei in den Figuren 2 bis 7 zunächst solche Anordnungen dargestellt sind, bei denen die spiralförmigen Rohrsysteme 18 und 19 nicht vorgesehen sind.

Die Figuren 2 und 3 zeigen einen Schnitt durch ein Gehäuse 25, bei dem anstelle des zuvor beschriebenen Rohrsystems durch einen zylindrischen Einsatz 21 ein Hohlraum 22 gebildet wird, durch den das Treibgas in den Bereich der Spitze einer Kathode 23 gelangt. In eine Bohrung des Einsatzes 21 ist ein Rohrstück 24 aus Rhenium derart eingesetzt, daß das Treibgas, wie in Fig. 3 durch einen Pfeil angedeutet, die Wandflächen der Brennkammer 27 tangential anströmt. Zugleich ist, wie aus Fig. 2 ersichtlich, das Rohrstück 24 unter einem Winkel α in bezug auf die Querachse der Brennkammer 27 eingesetzt, so daß dem Gasstrom zusätzlich eine Bewegungskomponente in Richtung auf den Düsenhals 28 hin vermittelt wird.

Ein Teil des Gasstromes tritt ferner über eine zentrische Bohrung 26 über die Spitze der Kathode 23 in die Brennkammer 27 ein, wobei diese Treibgase unmittelbar in einen in Fig. 2 durch Schattierung angedeuteten Lichtbogen 29 gelangen, der zwischen der Anode 25 und der Kathode 23 gezündet ist. Der Lichtbogen erstreckt sich dabei, eng gebündelt, durch den Düsenhals 28 hindurch zur Kathode, wobei er aus der Innenwand dieser Expansionsdüse austritt.

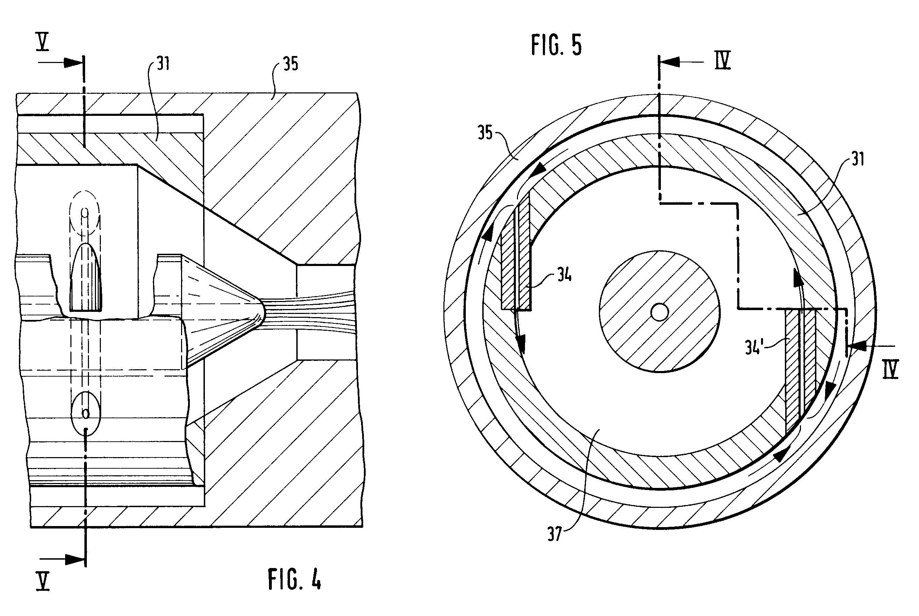

Die in den Figuren 4 und 5 dargestellte Anordnung unterscheidet sich von der vorangehend beschriebenen dadurch, daß in diesem Fall zwei Rohrstücke 34 und 34' in einen Einsatz 31 eines Gehäuses 35 eingeschweißt bzw. -gelötet sind. Auch in diesem Fall sind die Rohrstücke so angeordnet, daß das Treibgas die Innenwand der Brennkammer 37 tangential anströmt. Durch die zweigeteilte Gasführung ergibt sich dabei eine nochmals verbesserte Rotation der Treibgase. Indem Durchmesser und Länge der beiden Rohrstücke 34 und 34' unterschiedlich gewählt werden, ergibt sich ferner die Möglichkeit, durch das Rohr mit dem kleineren Innendurchmesser und der geringeren Länge nur eine kleine Gasmenge zur Zündung des Triebwerkes einzuspeisen, um so die insbesondere bei der Zündung auftretende Erosion an der Kathode zu verhindern und anschließend über das längere Rohr die für den stationären Betrieb erforderliche größere Gasmenge zuzuführen.

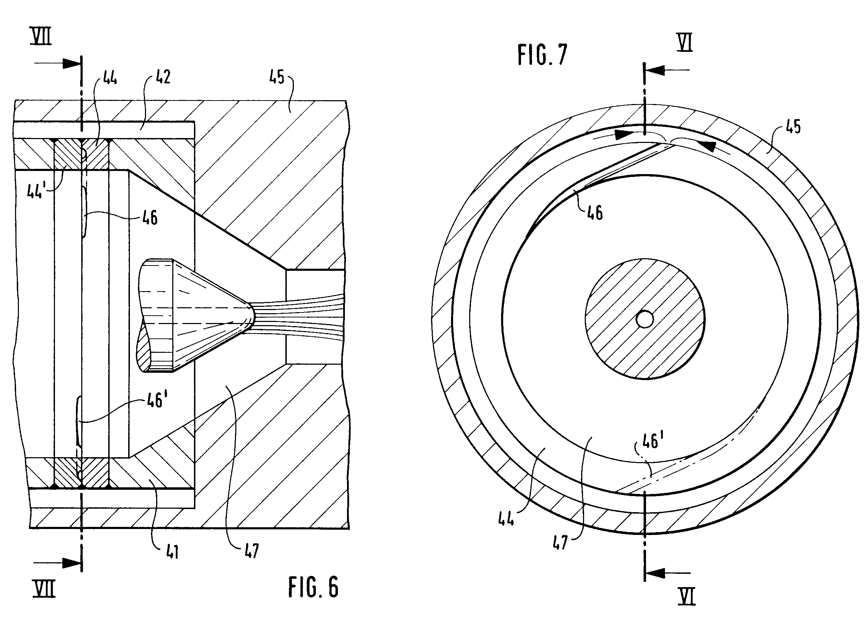

Das gleiche wird bei der in den Figuren 6 und 7 dargestellten Anordnung dadurch erreicht, daß in einen Einsatz 41, der wiederum in einem Gehäuse 45 gehaltert ist, zwei Scheiben 44 und 44' angeordnet sind, die mit Nuten 46 und 46' versehen sind. Die Nuten 46 und 46' erstrecken sich, wie aus Fig. 7 ersichtlich, vom Hohlraum 42 in die Brennkammer 47 und verlaufen derart, daß der Eintritt der Treibgase in die Brennkammer 47 auch in diesem Fall tangential zur Wand erfolgt. Die Nuten 46 und 46' können dabei sowohl kreisförmige als auch andere, beispielsweise rechteckige, Querschnitte aufweisen, die in die aus Werkstoffen wie Molybdän oder Wolfram bestehenden, zusammengeschweißten Scheiben 44 und 44' eingearbeitet sind.

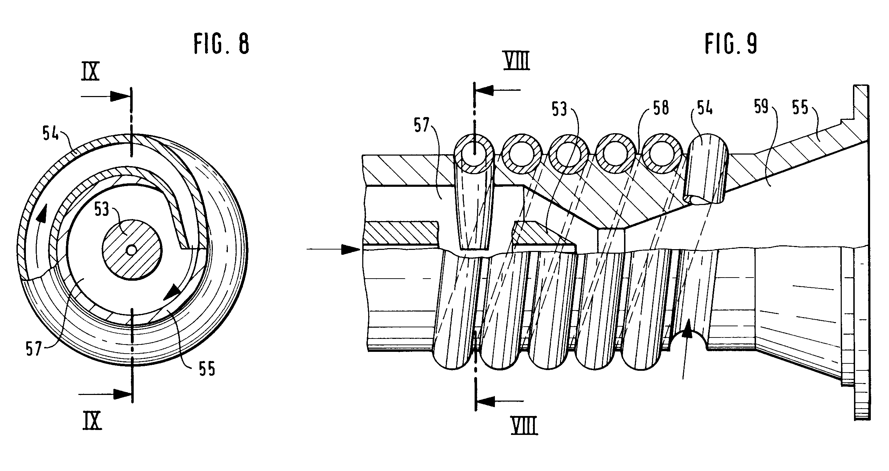

Während bei den in den Figuren 2 bis 7 gezeigten Anordnungen nur der eigentliche Einspritzbereich der Treibgaszuführung aus einem Rheniumrohr besteht, ist bei der in den Figuren 8 und 9 dargestellten Anordnung, wie auch schon in Fig. 1, die gesamte Gasführung in die Brennkammer 57, mit Ausnahme des durch die Kathode verlaufenden Teilstrahles, durch Rheniumrohre realisiert. Insbesondere das den Bereich der Kathodenspitze 53, des Düsenhalses 58 und der Expansionsdüse 59 spiralförmig umgebende Rohr 54, das teilweise in das Gehäuse 55 eingelassen ist, bewirkt eine nachhaltige Kühlung dieses thermisch hoch beanspruchten Triebwerksteils.

Das mit etwa 500 bis 600^{o}C aus der Zersetzungskammer austretende Treibgas, ein Gemisch aus Stickstoff (N₂), Ammoniak (NH₃) und Wasserstoff (H₂) erwärmt sich dabei im Rohr 54, bevor es, wie durch die Pfeile in Fig. 8 angedeutet, tangential in die Brennkammer 57 strömt. Ein zweiter Teilstrahl des vergleichsweise kühl aus der Zersetzungskammer kommenden Treibgases strömt auch in diesem Fall durch eine zentrische Bohrung der Kathode 53 in die Brennkammer 57 und kühlt dabei die Kathodenspitze so weit ab, daß ihre Erosion vermieden wird.

Durch diese geteilte Gasführung werden die Bereiche mit höchster thermischer, Beanspruchung weitestgehend geschützt. Zusätzlich wird dadurch, daß das 500^{o}C warme Treibgas der Kathodenspitze durch die zentrische Bohrung von Beginn an Wärme zuführt, für die Kathode gleichsam ein Warmstart durchgeführt, der den Verschleiß an der Kathodenspitze wesentlich herabsetzt.

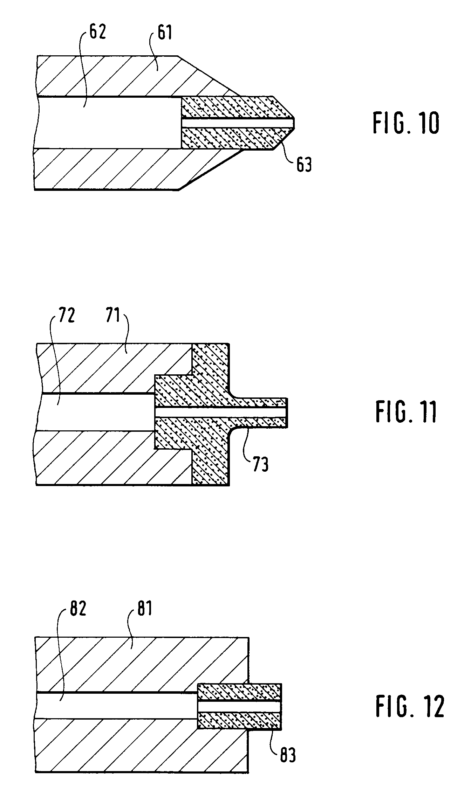

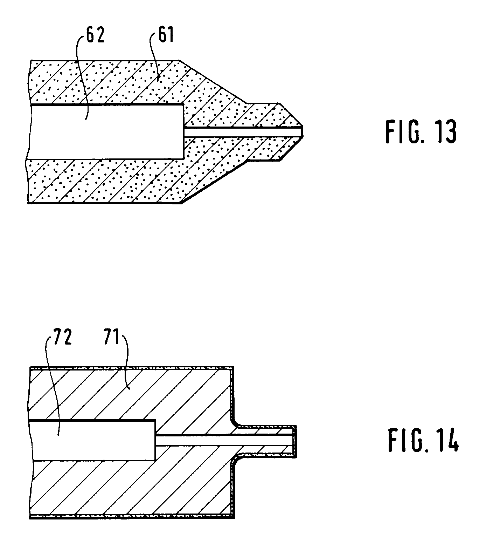

In den Figuren 10 bis 12 sind schließlich verschiedene Ausführungsformen der Kathodenspitze dargestellt, wobei in die mit einem zentrischen Strömungskanal 62,72 bzw. 82 versehene Kathode 61,71 bzw. 81 jeweils ein Einsatzkörper als separate Spitze 63,73 bzw. 83 eingesetzt ist. Die Spitzen 63,73 bzw. 83 sind in die Kathode eingeschweißt bzw. eingelötet und bestehen aus thoriertem Wolfram oder aus CVD Wolfram Chemical vapor deposited tungsten (Wolfram), während die Kathoden aus Rhenium oder Molybdän bzw. dessen Legierungen bestehen. Die Spitzen 63,73 und 83 weisen jeweils einen zylindrischen Bereich auf, der aus der Kathode herausragt und der sicherstellt, daß die Form der Kathodenspitze auch dann erhalten bleibt, wenn sich bei längerer Betriebsdauer trotz aller vorangehend geschilderten Präventivmaßnahmen Erosionserscheinungen zeigen, durch die sich die Spitzen verkürzen. Es ist ebenso möglich, die Kathode komplett aus CVD tungsten zu fertigen (Fig. 13 und 14). Ein weiterer Vorteil einer zylindrischen Formgebung an der Spitze ist die kontrollierte maximale Mittenabweichung des Lichtbogens, der sich während des gesamten Betriebes nie über den halben Durchmesser der Kathodenspitze hinaus verändern kann.

## Patentansprüche

1. Triebwerk, insbesondere für Raumflugkörper, bei dem zwischen einem als Anode und Expansionsdüse ausgebildeten Gehäuse sowie der Spitze einer in diesem angeordneten Kathode bei Gasströmung ein Lichtbogen gezündet wird, wobei die Kathode elektrisch isoliert in einer ersten, als Brennkammer ausgebildeten Ausnehmung des Gehäuses untergebracht ist und diese mit der Spitze mit kleinem Luftspalt beabstandet vor dem verengten Querschnitt der Expansionsdüse positioniert ist und wobei in die Brennkammer Treibgase eingespritzt werden, dadurch gekennzeichnet, daß die Kathode (11,23,53,61,71,81) mit einer durchgehenden Bohrung (20,26,62,72,82) versehen ist, die einerseits von den Treibgasen durchströmt wird und die andererseits an der Spitze der Kathode (11,23,53,61,71,81) in die Brennkammer (7,27,37,47,57) mündet.

2. Triebwerk nach Anspruch 1, dadurch gekennzeichnet, daß die Kathode (11,23,53,61,71,81) mit der Bohrung (20,26,62,72,82) aus einem Stück aus CVD tungsten gefertigt ist.

3. Triebwerk nach Anspruch 1, dadurch gekennzeichnet, daß die Kathodenspitze von einem Einsatzkörper (63,73,83) gebildet wird, der einen zylindrischen Bereich aufweist und der an der dem Düsenhals (8) zugewandten Stirnfläche der Kathode (61,71,81) angeordnet ist.

4. Triebwerk nach Anspruch 2, dadurch gekennzeichnet, daß der Einsatzkörper (63,73,83) aus thoriertem Wolfram besteht.

5. Triebwerk nach Anspruch 2 oder 3, dadurch gekennzeichnet, daß der Einsatzkörper (63,73,83) in die Kathode (61,71,81) eingeschweißt ist.

6. Triebwerk nach Anspruch 2, dadurch gekennzeichnet, daß der Einsatzkörper (63,73,83) aus CVD tungsten (Wolfram) besteht (chemical vapor deposited Tungsten) gefertigt ist.
